Europäisches Patentamt

European Patent Office

Office européen des brevets

(19)

(11) EP 0 578 313 B1

# (12) FASCICULE DE BREVET EUROPEEN

(45) Date de publication et mention
de la délivrance du brevet:
**02.12.1998 Bulletin 1998/49**

(51) Int Cl.⁶: **H04L 5/06**

(21) Numéro de dépôt: **93201924.3**

(22) Date de dépôt: **01.07.1993**

(54) **Codage enchaîné, pour la transmission OFDM**

Verkettete Kodierung für OFDM-Übertragung

Concatenated coding for OFDM transmission

(84) Etats contractants désignés:
**DE FR GB IT**

(30) Priorité: **08.07.1992 FR 9208458**

(43) Date de publication de la demande:
**12.01.1994 Bulletin 1994/02**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Koninklijke Philips Electronics N.V.**
  **5621 BA Eindhoven (NL)**
  Etats contractants désignés:
  **DE GB IT**

(72) Inventeurs:
- **Chouly, Antoine, Société Civile S.P.I.D.**
  **F-75008 Paris (FR)**

- **Brajal, Américo, Société Civile S.P.I.D.**
  **F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
**EP-A- 0 369 917**          **EP-A- 0 448 492**

- **EBU REVIEW- TECHNICAL no. 224, Août 1987, BRUSSELS BE pages 168 - 190 LASSALLE ET AL. 'Principles of modulation and channel coding for digital broadcasting for mobile receivers'**
- **IEEE TRANSACTIONS ON COMMUNICATIONS vol. 38, no. 6, Juin 1990, NEW YORK US pages 752 - 762 KASAMI ET AL. 'A concatenated coded modulation scheme for error control'**

## Description

L'invention concerne un système de transmission de signaux numériques opérant par modulation codée d'une constellation, ledit système comprenant un dispositif de codage muni d'un modulateur placé dans une station émettrice et un dispositif de décodage muni d'un démodulateur placé dans une station réceptrice, le dispositif de codage comprenant un codeur de canal à multiétages qui combine un codage de canal à la modulation codée et comprend un organe d'affectation pour affecter les signaux des étages aux points de la constellation et délivrer des symboles, lesdits symboles étant d'abord entrelacés dans un entrelaceur fréquentiel puis modulés dans le modulateur qui opère par répartition multiplexée de porteuses à fréquences orthogonales, et le dispositif de décodage comprenant un démodulateur de signaux modulés par répartition multiplexée de porteuses à fréquences orthogonales et un désentrelaceur fréquentiel, ainsi qu'un décodeur de canal à multiétages qui comprend, pour au moins un étage,

- au moins un décodeur interne qui effectue un décodage interne en bloc,
- et au moins un décodeur externe, des détecteurs opérant une détection sur lesdits niveaux de partition de la constellation.

Un tel système de transmission est utilisé principalement pour la transmission de signaux de télévision numérique (audio et/ou vidéo) vers des récepteurs portables, des récepteurs mobiles ou autres.

Il peut s'agir de transmettre des signaux numériques de télévision par un canal satellite ou des signaux numériques par des faisceaux hertziens. Il peut s'agir également de transmettre du son par radio mobile, ou des données numériques pour leur stockage par exemple dans un disque compact, un magnétoscope numérique. Dans ces cas, il est nécessaire à l'émission d'opérer à la source une réduction préalable de débit par un codeur de source et de rétablir le débit à la réception par un décodeur de source. Dans les cas où l'on désire transmettre des données numériques entre deux unités de traitement numérique, par exemple entre deux calculateurs, cette réduction de débit par un codeur de source ne s'impose pas.

L'application la plus représentative étant celle concernant la télévision numérique pour laquelle les problèmes sont les plus étendus, la présente demande est présentée pour cette application sans que cela puisse constituer une quelconque limitation.

La numérisation des signaux de télévision numérique engendre un débit brut total pour lequel une transmission est économiquement irréalisable sur les canaux de transmission existants. Plusieurs techniques de codage pour la réduction du débit (codage de source) ont été développées. Les performances de ces algorithmes de codage se mesurent en terme de leur "facteur de réduction" de débit et de la qualité de l'image restituée après le décodage. Plus on réduit la redondance du signal, plus l'information transmise est signifiante. Les éventuelles erreurs de transmission qui peuvent assez facilement être corrigées si les informations transmises sont redondantes, ont des conséquences de plus en plus graves lorsque le facteur de réduction augmente.

En conséquence, la transmission des signaux de télévision numérique nécessite une protection judicieuse. Afin de ne pas apercevoir les effets d'erreurs de transmission sur un écran, le taux d'erreurs en ligne doit être inférieur à $10^{-10}$.

Le canal utilisé pour la diffusion par transmission terrestre se caractérise par :

- une largeur de bande totale de 8 MHz, la bande effective étant de l'ordre de 7 MHz,
- la présence d'un bruit puissant, considéré comme additif, blanc et gaussien,
- des évanouissements sélectifs dus à la propagation par trajets multiples du signal émis.

Les techniques de codage de source connues, par exemple basées sur une transformation orthogonale, peuvent être utilisées pour diminuer le débit par un facteur supérieur à 10 tout en assurant une bonne qualité d'image restituée. Ceci conduit à transmettre un débit binaire de l'ordre de 8 Mbits/s. L'acheminement des signaux de télévision numérique via un tel canal exige un codage de source ainsi qu'une modulation numérique à efficacité spectrale de l'ordre de 1, 2 bits/s/Hz.

Il est ensuite nécessaire d'opérer un codage de canal pour protéger la transmission contre les imperfections du canal. Les techniques de codage et de modulation classiques s'avèrent limitées pour répondre pleinement aux exigences d'une transmission correcte (dans ces techniques, la fonction codage est considérée comme une entité indépendante de la fonction modulation). Cependant les techniques de codage se sont sensiblement améliorées grâce à la technique de codage proposée par G. UNGERBOECK dans l'article intitulé : "Channel coding with multilevel/phase signals" présenté dans IEEE Transactions on Information Theory vol. IT-28 n°1, January 1982, p. 55-67.

Il est proposé de considérer le codage de canal et la modulation comme une entité et pour cela de combiner un codage de canal avec une modulation numérique. Ceci permet d'accroître l'efficacité de la transmission numérique, donc d'améliorer les performances, sans sacrifier l'efficacité spectrale. La redondance ajoutée par le codage est transmise par la redondance de l'alphabet au lieu de diminuer le taux de données. Cette technique est basée sur le principe de maximisation de la distance euclidienne minimale entre les séquences de points codés transmises.

Ainsi, après un codage qui transforme p bits d'informations en m bits, avec m>p où m-p représente la redondance ajoutée pour la protection d'informations lors de la transmission, avec une modulation à $2^m$ états on dispose de $2^{m-p}$ états supplémentaires pour transmettre cette redondance. Cette technique de modulation permet d'effectuer une répartition spatiale et non pas temporelle de la redondance.

A la suite de la découverte par G. UNGERBOECK des modulations codées en treillis (MCT), des modulations codées en bloc (MCB) et des modulations multidimensionnelles codées en treillis ont été proposées.

Des MCT de complexité modérée (4 ou 8 états) peuvent donner un gain de codage de 3 à 4 dB. Mais, dans les applications grand public, l'implantation d'un décodeur de Viterbi nécessaire pour décoder ces MCT reste coûteuse avec la technologie actuelle. Une technique de codage attrayante pour ces applications est celle du codage à multiniveaux. L'intérêt de cette technique est qu'elle est adaptée à un procédé simple de décodage sous-optimal s'effectuant par étapes et présentant un bon compromis entre les performances et la complexité d'implantation.

En se basant sur le principe de partition d'une constellation révélé par G. UNGERBOECK, l'utilisation du codage à multiniveaux a été analysée en particulier par G.J. POTTIE et D.P. TAYLOR dans "Multilevel Codes Based on Partitioning" IEEE Transactions on Information Theory vol. 35, n°1, January 1989, p. 87 - 98. Ils décrivent un système de transmission de signaux numériques du genre décrit dans le premier paragraphe de la description.

Dans leur article ces auteurs analysent, premièrement, le principe du codage à multiniveaux qui consiste à partitionner une constellation et à coder les points de la constellation, et, deuxièmement, définissent un codeur multiétages, un étage de codage étant affecté à un niveau de partition, les points étant transmis par blocs à travers un canal de transmission. Cet article considère le cas d'une seule constellation.

A la réception, un décodeur multiétages effectue les opérations inverses de celles effectuées au codage et restitue des points correspondant aux points émis. Dans un décodeur classique ceci met en oeuvre des opérations de décision qui estiment des points et déterminent des bits pour les codes des points estimés en fonction de la phase et de l'amplitude qui sont détectées à la réception pour chaque point reçu. Selon les diverses conditions de transmission et de réception, certains des bits estimés sont erronés. Un premier étage du décodeur multiétages décide d'après le premier niveau de la partition. Le résultat délivré par ce premier étage est utilisé pour valider la mise en fonctionnement du second étage et ainsi de suite jusqu'au dernier étage.

Pour coder la redondance, ces auteurs utilisent un codeur de canal formé d'un codeur interne suivi d'un codeur externe. Le codeur interne effectue un codage convolutif qui est concaténé avec un codage de parité effectué par le codeur externe. Les mots de code sont ensuite convertis en points d'une constellation codée puis transmis par un modulateur. L'utilisation de codes en bloc est également évoquée.

Le but de l'invention est de proposer un système de transmission qui utilise à la réception le décodeur de canal - correspondant nécessairement à ce codeur de canal prévu du côté émission- pour remédier à certaines imprécisions de fonctionnement.

A cet effet l'invention concerne un système de transmission tel que défini dans le préambule de la description et qui est en outre caractérisé en ce que le décodeur interne génère des effacements de bits et/ou de séquences de bits, au moins le décodeur externe corrigeant lesdits effacements.

Le document "Principles of modulation and channel coding for digital broadcasting for mobile receivers", EBU Review-Technical n°224, août 1987, Brussels BE, Lassalle et al, pp.168-190, traite de manière assez approfondie du problème du codage de canal en diffusion numérique pour la téléphonie mobile, et notamment des principes généraux de multiplexage dit OFDM, qui consiste en un système de répartition multiplexée de fréquences orthogonales conférant une grande robustesse vis-à-vis des évanouissements du signal reçu en cas de modification du canal de transmission. Un tel système comprend en particulier, du côté réception, des opérations de décodage interne à maximum de vraisemblable, mais n'évoque pas le problème, ici traité, de la génération des effacements éventuellement produits par celles-ci.

Les différents aspects de l'invention et d'autres encore seront maintenant mis en évidence à partir des modes de réalisation décrits ci-après.

L'invention sera mieux comprise à l'aide des figures suivantes données à titre d'exemples non limitatifs qui représentent :

Figures 1-A et 1-B : un schéma bloc d'un dispositif de codage et d'un dispositif de décodage de signaux numériques.

Figures 2-A, 2-B, 2-C : une représentation d'une constellation $A_0$ d'une modulation MDP-4 et de ses deux niveaux de partition.

Figure 3 : un schéma d'un codeur à multiétages pour codes concaténés.

Figure 4 : une matrice de codage d'une modulation MDP-4 avec deux niveaux de codage.

Figure 5 : un schéma d'un dispositif de codage et d'un dispositif de décodage selon l'invention.

Figure 6 : un schéma d'un décodeur à multiétages pour codes concaténés.

Figure 7 : un schéma d'un décodeur à deux étages selon l'invention.

Figures 8-A, 8-B : une représentation d'une constellation MDP-4 avec des points reçus.

Figure 9 : une représentation du treillis d'un code interne.

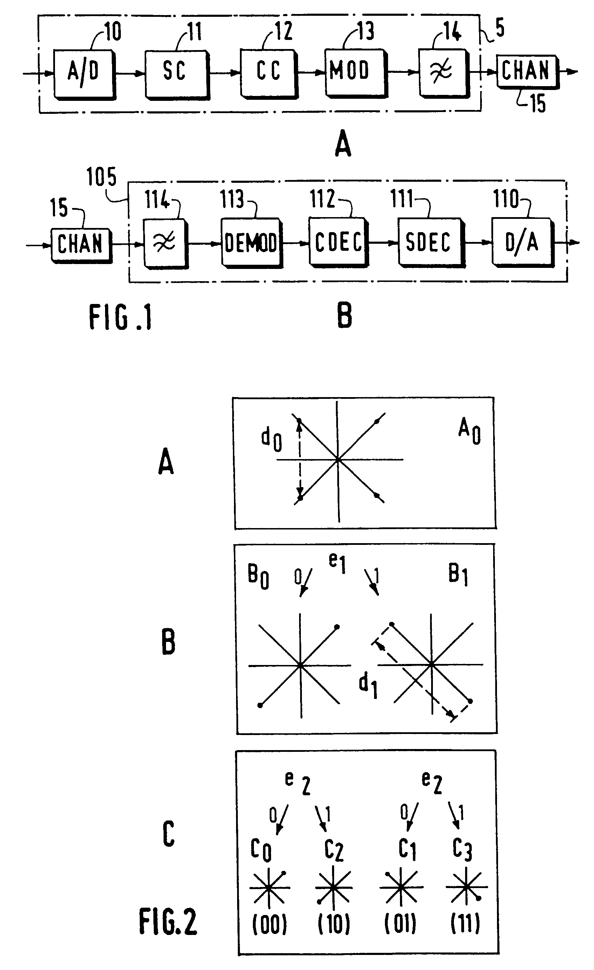

La figure 1-A représente un schéma-bloc d'un dispositif de codage 5 de signaux numériques tel qu'il apparaît dans la partie émettrice d'une chaîne de transmission. Il comprend en série :

- une source 10, par exemple un convertisseur analogique-numérique A/D, qui délivre les signaux numériques à coder lorsqu'ils ne sont pas déjà disponibles sous forme numérisée,
- un codeur de source SC 11 (qui peut ne pas exister),
- un codeur de canal CC 12,
- un modulateur MOD 13,
- un filtre d'émission 14.

Le dispositif de codage est relié à un canal de transmission 15. Il peut s'agir de liaisons hertziennes, de liaisons par satellite ou de liaisons par câbles.

Pour une application de transmission de signaux de télévision numérique avec une qualité meilleure que celles de la télévision analogique actuelle (normes PAL, SECAM, etc...), ce débit binaire doit être de l'ordre de 8 Mbits/s à la sortie du codeur de source 11. Ces échantillons sont codés par le codeur de canal 12 pour les rendre non vulnérables aux imperfections du canal. Le modulateur 13 adapte ensuite les échantillons numériques au canal de transmission par exemple un canal multitrajets à évanouissements sélectifs.

La figure 1-B représente le schéma-bloc d'un dispositif de décodage 105 qui effectue à la réception des opérations inverses de celles effectuées à l'émission. Pour cela il comprend (à la sortie du canal 15) :

- un filtre de réception 114,
- un démodulateur DEMOD 113,
- un décodeur de canal CDEC 112,
- un décodeur de source SDEC 111 (qui peut ne pas exister),
- un convertisseur numérique-analogique D/A 110 lorsque les signaux numériques sont utilisés sous forme analogique.

Le dispositif de codage 5, le dispositif de décodage 105 constituent un système de codage/décodage de signaux numériques à modulation codée opérant sur le canal de transmission 15.

A - <u>EMISSION</u>

1) CODAGE

Le codage de canal concerné par l'invention est un codage à multiniveaux. Dans un souci de clarté le principe du codage à multiniveaux est d'abord expliqué.

Considérons (figure 2-A) une constellation $A_0$ à $2^m$ points capable d'assurer la transmission de m bits par point. Si M (avec $M \leq m$) désigne le nombre de bits à coder, la constellation $A_0$ est partitionnée en M niveaux donnant ainsi $2^M$ sous-emsembles. Le principe de cette partition est identique à celui défini par G. UNGERBOECK. Ce principe maximise la distance euclidienne minimale dans les sous-ensembles de la partition. Si on désigne par $d_i$ la distance euclidienne minimale dans les sous-ensembles obtenus au $i^{ème}$ niveau de partition, l'inégalité suivante doit être vérifiée :

$$d_0 < d_1 < d_2 < ... < d_M$$

où $d_0$ est la distance minimale dans $A_0$.

Ainsi, les M bits $e_1$, $e_2$,..., $e_i$,..., $e_M$, (avec $e_i$ le bit affecté au $i^{ème}$ niveau de la partition), sélectionnent un des $2^M$ sous-ensembles, et les m - M bits restants désignent un point dans le sous-ensemble sélectionné. La figure 2 donne, à titre d'exemple, le schéma des partitions pour une modulation MDP-4. La constellation $A_0$ (fig. 2A) est partitionnée (fig. 2B) tout d'abord en deux sous-ensembles $B_0$ et $B_1$, de distance minimale $d_1$, avec $e_i = e_1 = 0/1$ ($e_1 = 0$ pour $B_0$ et $e_1 = 1$ pour $B_1$), puis (fig. 2C) en quatre sous-ensembles $C_i$, $i \in \{0,1,2,3\}$, avec $e_i = e_2 = 0/1$ ($e_2 = 0$ pour $C_0$ ou $C_1$ et $e_2 = 1$ pour $C_2$ ou $C_3$). Un sous-ensemble est alors constitué d'un point. On a $d_0 < d_1$.

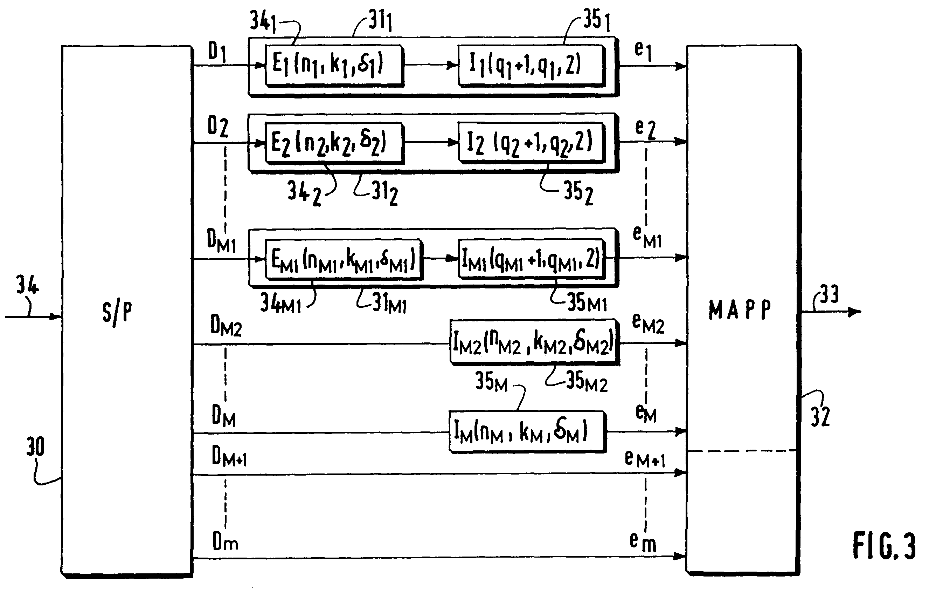

Ce procédé d'affectation des points de la constellation a pour but de classer les m bits que représente le point émis en fonction de leurs vulnérabilités vis-à-vis du bruit. D'après le principe de partition décrit précédemment, on peut montrer dans le cas général que si les bits $e_k$, $k \leq i - 1$, sont suffisamment protégés pour qu'ils soient corrects, le bit $e_i$, $i \leq M$, est mieux protégé vis-à-vis du bruit que tous les autres bits $e_j$, $j < i$ et que les $(m-M)$ derniers bits sont les moins vulnérables. Cela implique qu'il est plus judicieux de coder ces bits séparément avec des codes différents et de ne pas procéder à un codage série classique où tous les bits sont protégés de la même façon vis-à-vis du bruit du canal. C'est le principe du codage à multiniveaux qui consiste, après avoir partitionné la constellation $A_0$ en M niveaux, à utiliser M codeurs $E_i$, $i = 1,..., M$, pour protéger ces M bits avec plusieurs niveaux de protection. Le schéma de ce codeur est représenté sur la figure 3. Le train de données à transmettre (connexion 34) de débit D est divisé en m trains de débits $D_i$, $i = 1,..., m$ dans l'élément S/P 30. Les M premiers trains sont codés par M codes, les trains de données suivants $D_{M+1}$ à $D_m$ peuvent ne pas être codés.

Parmi les M trains binaires codés, les premiers, de $D_1$ à $D_{M1}$, sont codés par des codes concaténés $(E_i, I_i)$, $E_i$ étant un code en blocs et $I_i$ étant un code de parité. Les trains binaires suivants, après $D_{M1}$ et jusqu'à $D_M$, sont codés par un codage binaire unique $I_i$ $(n_i, k_i, \delta_i)$.

Les codes $E_i$ $(n_i, k_i, \delta_i)$, $i = 1... M$, ont un rendement $R_i = k_i/n_i$ où $n_i$ représente le nombre de symboles transmis par bloc, $k_i$ représente le nombre de symboles d'informations transmis par bloc, $\delta_i$ représente la distance minimale de Hamming. Des codeurs externes $34_1$, $34_2$,... $34_{M1}$ effectuent les codages $E_i$. Un symbole de code $E_i$ est représenté sur $q_i$ bits.

Les codes de parité $I_i$ $(q_{i+1}, q_i, 2)$ codent chaque symbole de $q_i$ bits délivrés par les codeurs externes, en leur ajoutant un bit de parité. Des codeurs internes $35_1$, $35_2$,... $35_{M1}$ effectuent les codages $I_i$.

Le codage de chaque symbole du code externe par un code interne de parité constitue le codage concaténé $31_1$ des deux codes $E_i$ et $I_i$. On évite ainsi l'usage d'un entrelaceur à l'émission et d'un désentrelaceur à la réception entre le codeur interne et le codeur externe.

Les $M_1$ bits sont codés par un codage concaténé d'où leurs distances minimales équivalentes (sachant que $d_i$ représente les distances issues de la partition, avec :

$$d_0 < d_1 < d_2... < d_{M1}... < d_M),$$

$$(dis_1)^2_i = 2\ d^2_{i-1}\ \delta_i, \quad i = 1,... M_1.$$

De même les distances minimales équivalentes des bits codés par un code unique de distance minimale $\delta_i$ ($i > M_1$) sont :

$$(dis_2)^2_i = \delta_i\ d^2_{i-1}, \quad i = M_1+1,... M,$$

et ceux qui ne sont pas codés :

$$(dis_3)^2_i = d^2_M = constante \quad i = M+1,... m.$$

Le système est optimal si :

$$(dis_1)_i = (dis_2)_i = (dis_3)_i.$$

Les codes $E_1$,... $E_{M1}$ peuvent être des codes Reed-Solomon sur un corps de Galois CG $(2^{q1})$. C'est-à-dire que chaque symbole du code RS est constitué de $q_1$ bits.

Les codes $I_1$,... $I_{M1}$ peuvent être des codes binaires de parité $(q_1+1, q_1, 2)$.

Si l'on suppose que tous les codes $E_i$ ont la même longueur, avec $n_i = n$ et $q_i = q$, et que les M codes $E_i$ sont des codes en bloc, on peut décrire ce codage par une structure matricielle identique à celle utilisée pour les MCB. Un mot de code correspond à $n$ $(q+1)$ points de la constellation et peut être représenté par une matrice binaire G à m lignes et $n$ $(q+1)$ colonnes où la j$^{ème}$ colonne représente l'affectation binaire du j$^{ème}$ point du bloc (le point étant celui de la constellation) et la i$^{ème}$ ligne représente les bits affectés au i$^{ème}$ niveau de partition. La ligne i, $i = 1,..., M_1$ est un mot de code concaténé et les $(m-M)$ dernières lignes contiennent des bits soit non codés soit codés par un code interne unique.

Avec, par exemple, deux niveaux de partition dans le cas d'une modulation MDP-4 on a :

$$G = \begin{vmatrix} e_1^1 & e_1^2 & \ldots & e_1^i & e_1^{i+1} & \ldots & e_1^{n(q+1)} \\ e_2^1 & e_2^2 & \ldots & e_2^i & e_2^{i+1} & \ldots & e_2^{n(q+1)} \end{vmatrix}$$

Les bits d'une colonne, par exemple $e_1^1$, $e_2^1$, forment un point $r^1$.

Le codage à multiniveaux (figure 3) est effectué à l'aide d'un circuit 30 de conversion série-parallèle qui transforme les données série de débit D en données parallèles de débit $D_1$, $D_2$... $D_m$. Les $M_1$ premiers trains binaires sont codés par des codeurs $31_1$, $31_2$ ... $31_{M1}$ qui délivrent les données binaires codées $e_1$, $e_2$ ... $e_{M1}$ issues d'un codage concaténé par les codeurs $34_1$ à $34_{M1}$ et $35_1$ à $35_{M1}$. Les trains binaires de $M_2$ à M sont codés par des codeurs $35_{M2}$ ... $35_M$ qui délivrent des données binaires $e_{M2}$ ... $e_M$ issues du codage $l_i$ unique. Des trains binaires $D_{M+1}$ ... $D_m$ peuvent ne pas être codés. Un organe de sélection MAPP 32 permet d'assurer à chaque mot ($e_1$, $e_2$ ... $e_m$) l'affectation binaire d'un point de la constellation contenant $2^m$ points qui est émis ensuite par le modulateur 13 opérant selon la technique OFDM (connexion 33).

Selon l'invention pour traiter des débits de 8 Mbits/sec, on utilise préférentiellement une modulation MDP-4. Dans ce cas, le schéma de codage de canal met en oeuvre uniquement les deux premiers étages $31_1$, $31_2$ de la figure 3.

A titre d'exemple, dans le cas d'une MDP-4, avec m = M = 2, le codage du premier niveau (1er étage) peut être un codage concaténé formé :

- d'un code $E_1$ = RS (40, 30, 11) sur un corps de Galois de 256 éléments. Le nombre de bits d'un symbole est $q_1$ = 8,
- et d'un code $L_1$ = Parité (9, 8, 2).

Le code RS (40, 30, 11) a une longueur de 40 et une dimension de 30, soit 30 symboles d'information par bloc. Sa capacité de correction est de 5 et sa distance minimale est de 11. Il est concaténé avec le code de parité (9, 8, 2) ayant une longueur de 9 bits, une dimension de 8 et une distance minimale de 2. Les blocs de 8 bits à l'entrée du codeur interne constituent les symboles du code externe RS.

Le codage du second niveau (2ème étage) est codé par un code $E_1$ = RS (120, 110, 11) et par un code de parité :

$$l_2 = \text{Parité (9, 8, 2)}.$$

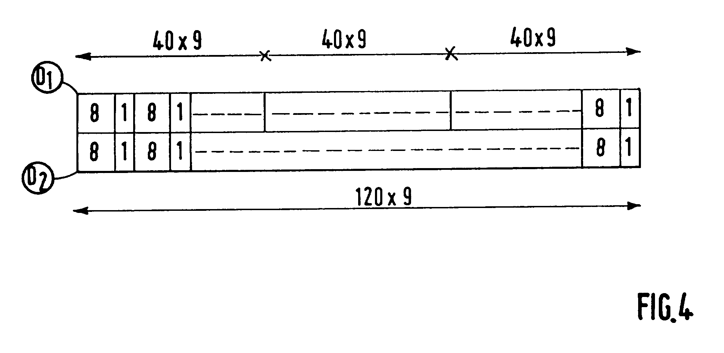

La matrice se présente alors sous la forme représentée sur la figure 4. Trois mots de code du niveau 1 correspondent à un mot de code du niveau 2. Un point de la MDP-4 est représenté par une colonne de cette matrice. Un bloc est alors formé de 1080 points consécutifs, ce qui est équivalent à 2160 bits transmis.

On utilise préférentiellement 2 codeurs RS qui ont la même capacité de correction mais avec 2 longueurs différentes afin de simplifier le décodeur. En effet, on utilise un seul décodeur RS à la réception avec un décodage séquentiel : on décode le niveau 1 (estimer la séquence des bits $e_1$) avant de décoder le niveau 2 (estimer les bits $e_2$).

Le fait d'utiliser un code RS plus court pour le premier niveau implique une protection plus grande pour le niveau 1 que pour le niveau 2. La longueur choisie pour le deuxième niveau (120) est un multiple de la longueur du code du premier niveau (40) afin de simplifier la synchronisation du décodeur.

Un mot de code est généré de la façon suivante :

- on répartit 1600 bits d'information à l'entrée du codeur sur 2 niveaux : (conversion S/P 30, figure 3).
- <u>niveau 1</u> : 720 bits sur le premier niveau D1 ou 90 octets qui seront codés par le codeur RS (40, 30, 11).

  Ainsi le codeur $34_1$ (figure 3) va générer 40 octets pour chaque 30 octets à l'entrée. On aura 3 blocs de 40 octets chacun, c'est-à-dire 120 octets à la sortie du codeur.

  Chaque octet (8 bits) sera codé par le code de parité $35_1$ (figure 3) qui va ajouter un bit de parité, donc on obtient 3 x 40 x 9 = 120 x 9 bits à la sortie du codeur du premier niveau (figure 4).
- <u>niveau 2</u> :

  880 bits sur le deuxième niveau D2 ou 110 octets d'information qui sont codés par le codeur $34_2$ (figure 3) RS (120, 110, 11). Celui-ci va générer un bloc de 120 octets. A la sortie du codeur de parité $35_2$ (figure 3), on aura donc 120 x 9 bits (comme pour le premier niveau). Les 120 x 9 bits du premier niveau D1 et les 120 x 9 bits du deuxième niveau D2 vont déterminer la séquence de 120 x 9 = 1080 symboles transmis à partir de la constellation MDP-4. Le rendement global du code R est de 1600 / (2 x 9 x 120) = 0,74, donc l'efficacité spectrale est $S_{eff}$ = 2 x R = 1,48 bits/s/Hz.

Le principe général décrit à la figure 3 s'applique également à d'autres modulations codées par exemple une modulation MAQ.

## 2) ENTRELACEMENT - CODAGE DIFFERENTIEL

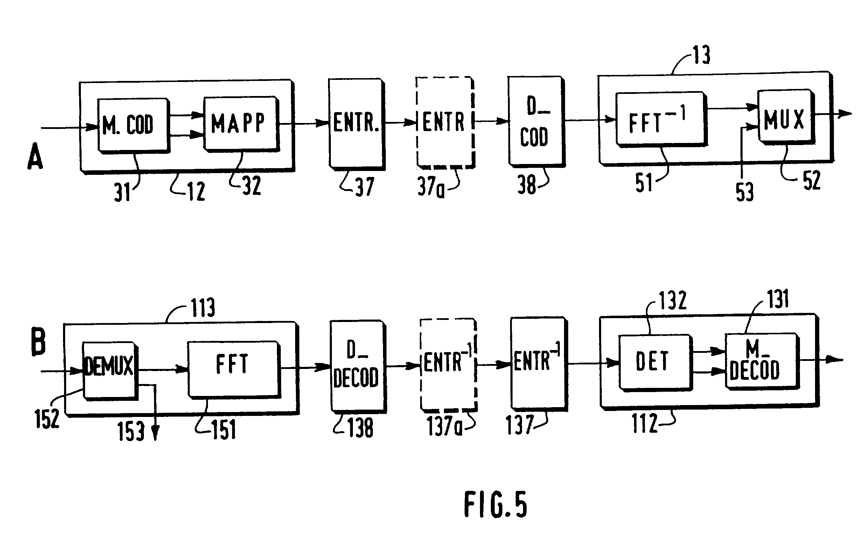

Les mots-code fournis par le codeur de canal étant transmis sur un canal qui peut être sélectif dans le domaine fréquentiel et éventuellement également dans le domaine temporel (récepteurs mobiles), il est recommandé de leur faire subir un entrelacement pour décorreler les symboles reçus constituant un bloc qui correspond à un mot de code. Le schéma de la figure 5-A représente le codeur multiniveaux M-COD 31 suivi de l'organe MAPP 32 d'affectation binaire. Les mots-code sont introduits dans un entrelaceur 37. Lorsque le canal est sélectif dans le domaine temporel, on effectue un entrelacement dans un entrelaceur temporel 37a. Ce schéma se rapporte préférentiellement à une modulation MDP. Pour faciliter la récupération de porteuse à la réception, préférentiellement, l'entrelaceur 37 est suivi d'un codeur différentiel D-COD 38 de phase. La modulation utilisée est ainsi une modulation MDP-4 différentielle (c'est-à-dire une DQPSK), le codage différentiel étant effectué indépendamment pour chaque porteuse utile avant de générer le symbole OFDM.

La phase d'un symbole $x_j$ est codée différentiellement par rapport à la phase d'un symbole $x_{j-1}$ précédent tel que :

$$x_j = (1/\sqrt{2})\, x_{j-1} \times C_j$$

où

$C_j$ est le symbole appartenant à la constellation MDP-4 généré par le codeur de canal,

où

$$C_j \in \{1+i,\ 1-i,\ -1+i,\ -1-i\}$$

et où i définit la représentation imaginaire.

## 3) MODULATION OFDM

Les symboles complexes $x_k$ issus du codeur différentiel sont transmis à l'aide d'un modulateur OFDM à répartition multiplexée de porteuses à fréquences orthogonales.

La technique OFDM consiste à multiplexer en fréquence plusieurs porteuses orthogonales modulées par les symboles. Un symbole OFDM peut s'écrire :

$$(1) \qquad s(t) = R_e \left\{ e^{2i\pi f_o t} \sum_{k=o}^{N-1} x_k \cdot \phi_k(t) \right\}$$

pour

$$j.T'_S < t < (j+1)\, T'_S$$

avec

$$\phi_k(t) = e^{2i\pi kt / T_S} \quad pour \quad jT'_S \le k \le (j+1)\, T'_S$$

où :

$T'_S$ : durée totale d'un symbole OFDM, $T'_S = T_S + \Delta$.
$R_e$ : partie réelle d'un nombre complexe.
$k$ : indice des porteuses orthogonales.
$T_S$ : durée utile d'un symbole OFDM.
$\Delta$ : intervalle de garde.

N : nombre maximal de porteuses.

$f_o$ : fréquence arbitraire.

j : indice du symbole OFDM.

Ainsi entre les instants $j.T'_S$ et $(j+1) T'_S$, un signal OFDM est constitué par un bloc de symboles complexes $x_k$, chaque $x_k$ modulant une porteuse orthogonale $0 \leq k \leq N-1$.

Pour éviter le problème de recouvrement de spectre et pour faciliter le filtrage à la réception, la somme correspondant à l'équation (1), est effectuée sur $N_u$ porteuses où $N_u$ est le nombre de porteuses utiles ($N_u < N$).

Pour réaliser la modulation OFDM, c'est-à-dire former le signal s(t) de l'équation 1, le modulateur 13 comprend un dispositif 51 de calcul d'une transformée de Fourier rapide inverse (FFT$^{-1}$). Pour cela on choisit pour N un nombre de la forme $2^x$ où x est un nombre entier. Le dispositif 51 est suivi d'un multiplexeur 52 qui dispose également d'une entrée 53 destinée à insérer d'autres blocs de contrôle destinés à la transmission.

Les paramètres choisis sont, par exemple, les suivants :

$$T'_S = 160 \ \mu s, \ T_S = 128 \ \mu s \ et \ \Delta = 32 \ \mu s,$$

$$N = 1024 \text{ porteuses}, \ N_u = 900 \text{ porteuses}.$$

L'intervalle de garde $\Delta$ a pour rôle principal d'absorber les échos provenant du canal multitrajets et ayant des retards inférieurs à $\Delta$. Durant l'intervalle de garde (qui est préférentiellement égal au quart de la durée utile), un signal identique à celui d'une partie de la durée utile est transmis. Par conséquent, ceci entraîne une perte en efficacité spectrale d'un rapport égal à

$$\frac{T_S}{T'_S} = \frac{T_S}{T_S + \Delta} \ (4/5 \ dans \ notre \ cas).$$

Le choix de $N_u = 900$ provient du fait que la bande autour de chaque porteuse étant de $1/T_S = 7,81$ KHz, il faut 900 porteuses pour avoir une bande effective du signal transmis d'environ 7 MHz (la largeur de bande exacte étant de 7,031 MHz).

Les symboles à la sortie du codeur de canal sont transmis par trames. Ainsi une trame regroupe plusieurs symboles OFDM multiplexés temporellement. Un symbole OFDM peut contenir des données ou peut être un symbole particulier servant à la synchronisation (de trame, de rythme, de porteuse) ou servant comme symbole de référence pour la modulation différentielle.

Un exemple de structure de trame est donné par :

```
   1    2    3    4     5     6      7       j-1  j        125
 ┌───┬───┬───┬─────┬─────┬──────┬──────┐    ┌─┬─┬─┐      ┌────────┐
 │Nul│AFC│Wob│EXT 1│EXT 2│DATA 1│DATA 2│    │ │ │ │      │DATA 120│
 └───┴───┴───┴─────┴─────┴──────┴──────┘    └─┴─┴─┘      └────────┘
  T_s = 160 µs                               k   k
 <───>
 <──────────────────────────────────────────────────────────────>
                         T_f = 20 ms
```

**TABLEAU I**

La trame contient 125 symboles OFDM et a une durée $T_f$ de 20 ms :

- Le premier symbole est le symbole nul durant lequel rien n'est transmis ($x_k = 0$, k = 0, N-1). Il est utilisé pour synchroniser le début de la trame.
- Le deuxième est le symbole AFC (contrôle automatique en fréquence) utilisé pour la synchronisation en fréquence de l'oscillateur local du récepteur par rapport à celui de l'émetteur.
- Le troisième est le symbole de wobulation défini par :

$$x_k = \sqrt{2}\ e^{j\phi_k}, \quad \phi_k = \pi\frac{k^2}{N} + \pi/4$$

Le symbole de wobulation est utilisé comme symbole de référence pour le codage différentiel et aussi pour estimer la réponse impulsionnelle du canal afin de récupérer la synchronisation du rythme.

- Les quatrième et cinquième symboles sont des symboles supplémentaires pouvant servir à transmettre des données de service.
- Finalement, on a les 120 symboles OFDM de données.

Une trame contient 100 mots de code générés par le codeur de canal.

L'utilisation d'un intervalle de garde fait diminuer l'efficacité spectrale d'un facteur 4/5 et l'insertion de 5 blocs de contrôle par trame sur 125 la fait diminuer de 120/125. L'efficacité spectrale globale du système est donc : $S_{eff}$ = 1,48 x 4/5 x 120 /125 = 1,136 bits/s/Hz.

Pour générer une trame OFDM, les opérations suivantes sont effectuées :

- Le codeur de canal 12 génère 100 mots de code de 1080 symboles chacun de la modulation MDP-4, ce qui correspond à la transmission de 160 Kbits d'information/trame ou 8 Mbits d'information/seconde.
- Les 100 x 1080 = 108 k symboles de la MDP-4 sont groupés par bloc de 900 symboles, ce qui correspond à 120 blocs de 900 symboles QPSK. Chaque bloc de 900 symboles va correspondre à un symbole OFDM avec 900 porteuses utiles. L'entrelacement fréquentiel (bloc 37) consiste à appliquer dans le domaine fréquentiel une permutation sur les 900 symboles QPSK constituant un symbole OFDM. Elle est effectuée selon :

$$P(i) = \text{mod}\ (100 + P(i-1), 900) + 1,$$

avec P(1) = 1, 2 ≤ i ≤ 900 et P(i) est la position du $i^{ème}$ symbole du bloc après l'entrelacement. La fonction mod est la fonction modulo. Le but est de réduire la corrélation des symboles reçus en effectuant un désentrelacement à la réception ce qui permet de rendre optimal l'utilisation du décodeur à multiétages. Si le canal est sélectif en temps, il faut rajouter un entrelaceur temporel 37a. Les deux entrelaceurs fréquentiel et temporel peuvent constituer une seule unité d'entrelacement fréquentiel/temporel.

- Ensuite, on effectue le codage différentiel (codeur 38) indépendamment, porteuse par porteuse, en prenant comme référence la phase de la porteuse correspondante du symbole de wobulation. Le codage différentiel est effectué entre 2 blocs consécutifs j-1 et j pour un symbole de même rang k dans les blocs (TABLEAU I).
- Pour générer le signal OFDM d'une trame, une $FFT^{-1}$ (bloc 51) de taille 1024 est effectuée 120 fois (une fois par bloc de 900 symboles). Pour avoir 1024 symboles, on ajoute à chaque bloc de 900 symboles 62 zéros de part et d'autres (échantillons à 0) avant d'effectuer la transformée de Fourier rapide inverse.
- Finalement, les 120 symboles OFDM de données à la sortie de la $FFT^{-1}$ sont multiplexés temporellement avec les 5 symboles OFDM de contrôle (connexion 53) , pour générer la trame de 125 symboles OFDM.

Le choix des paramètres concernant le codeur de canal (longueurs des codes RS sur le premier et le deuxième niveau, la capacité de correction des codes), et concernant le modulateur OFDM (nombre $N_u$ de porteuses utiles et le nombre $N_s$ de symboles OFDM par trame) résulte du fait qu'une trame doit contenir un nombre entier de mots de code (pour pouvoir utiliser la synchronisation de la trame pour repérer le début du bloc reçu et correspondant à un mot de code émis) et avoir approximativement une bande de 7 MHz. La solution retenue est :
$N_u$ = 900 porteuses et $N_s$ = 125 dont 120 symboles OFDM utiles
$N_1$ = 40 = longueur du code RS (1er niveau)
$N_2$ = 120 = longueur du code RS (2ème niveau).

B - <u>RECEPTION</u>

A la réception, le récepteur effectue les opérations inverses de celles qui ont été effectuées à l'émission. La figure 5-B représente un schéma d'un tel récepteur. Il comprend un démodulateur 113 comprenant un démultiplexeur 152 et un dispositif 151 de calcul d'une transformée de Fourier rapide directe (FFT). Le démultiplexeur 152 délivre des données de contrôle 153 qui servent à effectuer la synchronisation du récepteur. Le démodulateur 113 est suivi d'un décodeur différentiel 138, d'un désentrelaceur 137 et d'un décodeur de canal 112. Ce dernier comprend un détecteur 132 suivi du décodeur multiétages 131. Si un entrelacement dans le domaine temporel a été effectué à l'émission, on utilise aussi un désentrelaceur temporel 137a.

## 1) DEMODULATION

Pendant une durée-trame (20 ms), le démultiplexeur temporel 152 délivre les 120 blocs de données (sur les 125 constituant une trame). Un échantillonnage de fréquence $f_e = N/T_S = 8$ MHz est effectué sur le signal reçu, en ne gardant par bloc que les 1024 échantillons de la durée utile du bloc $T_s = 128$ µs (on ne tient pas compte des 256 échantillons du bloc pendant l'intervalle de garde).

- Ensuite, on effectue une FFT, pour chaque bloc de 1024 échantillons. On effectue ainsi 120 FFT par trame. Ceci permet de démoduler un signal OFDM.
- Pour chaque bloc de 1024 symboles à la sortie de la FFT, on conserve 900 symboles correspondant aux porteuses utiles.

## 2) DECODAGE DIFFERENTIEL - DESENTRELACEMENT

Un décodage différentiel est ensuite appliqué indépendamment sur chaque porteuse. Le décodeur différentiel 138 utilise 2 symboles de même rang k appartenant à 2 blocs consécutifs j-1 et j pour estimer le symbole QPSK émis, le symbole de référence étant la phase de la porteuse correspondante du symbole de wobulation (connu par le démodulateur).

Le décodeur différentiel délivre, par trame, 120 blocs de 900 symboles ou 100 blocs de 1080 symboles.

Le désentrelaceur fréquentiel 137 effectue ensuite le désentrelacement des symboles qui sont ensuite décodés par le décodeur de canal 112. Après le désentrelacement fréquentiel, le décodeur de canal décode par bloc de 1080 symboles car un mot de code correspond à 1080 symboles.

## 3 - DECODAGE

Le décodage va consister à effectuer les opérations inverses du codage. Pour chaque étage, on effectue une détection dans chacun des niveaux de la partition. On effectue un décodage concaténé dans les étages où un codage concaténé été effectué. Après chaque détection dans un sous-ensemble de la partition, chaque étage effectue deux décodages (décodage interne et décodage externe).

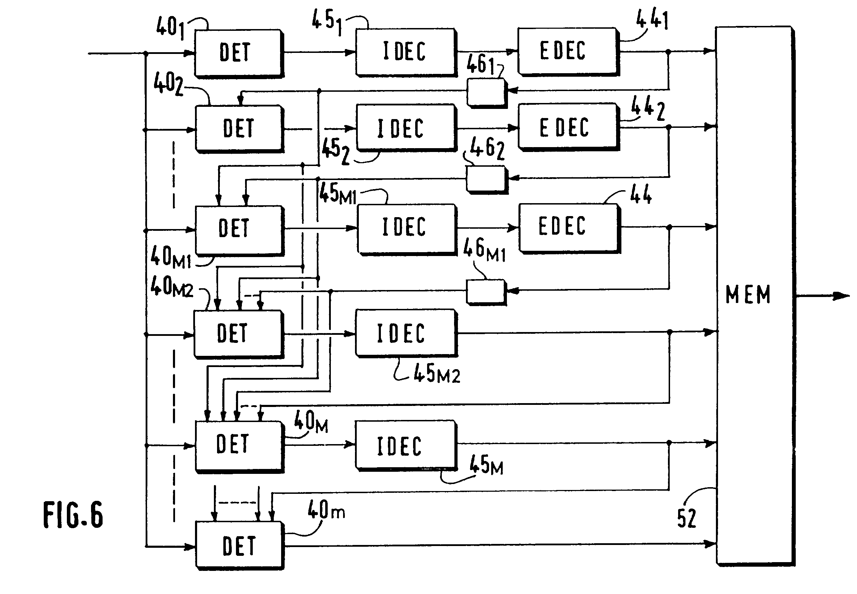

La figure 6 représente un schéma général d'un décodeur à multiétages avec certains étages opérant sur des codes concaténés. Des détecteurs $40_1$... $40_{M1}$, $40_{M2}$... $40_M$... $40_m$ effectuent chacun des détections dans un niveau propre de partition. Pour les étages $i = 1$ à $M_1$ des décodeurs I-DEC $45_1$, $45_2$... $45_{M1}$ effectuent des décodages internes à maximum de vraisemblance. Ceux-ci délivrent des mots-code internes effacés ou non effacés respectivement à des décodeurs externes E-DEC $44_1$, $44_2$... $44_{M1}$. Lesdits décodeurs internes suppriment la redondance due au codage interne de chaque point. Les décodeurs externes donnent ensuite des estimations des séquences de bits.

Pour estimer un niveau i, on tient compte des estimations effectuées dans les niveaux précédents. Pour cela, les informations estimées par le niveau i-1 sont à nouveau codées par des codeurs $46_1$, $46_2$... $46_{M1}$ pour retrouver la redondance des mots-code internes. Ceci est nécessaire pour avoir des mots-code de longueur n(q+1) bits nécessaires aux étages suivants.

Pour les étages où il n'y a qu'un seul type de codage interne ($i = M_2$ à M), on effectue seulement une détection et un décodage à maximum de vraisemblance.

Pour les étages où il n'y a pas de codage ($i = M+1$ à m), on effectue seulement une détection. Les données de sortie entrent dans une mémoire 52.

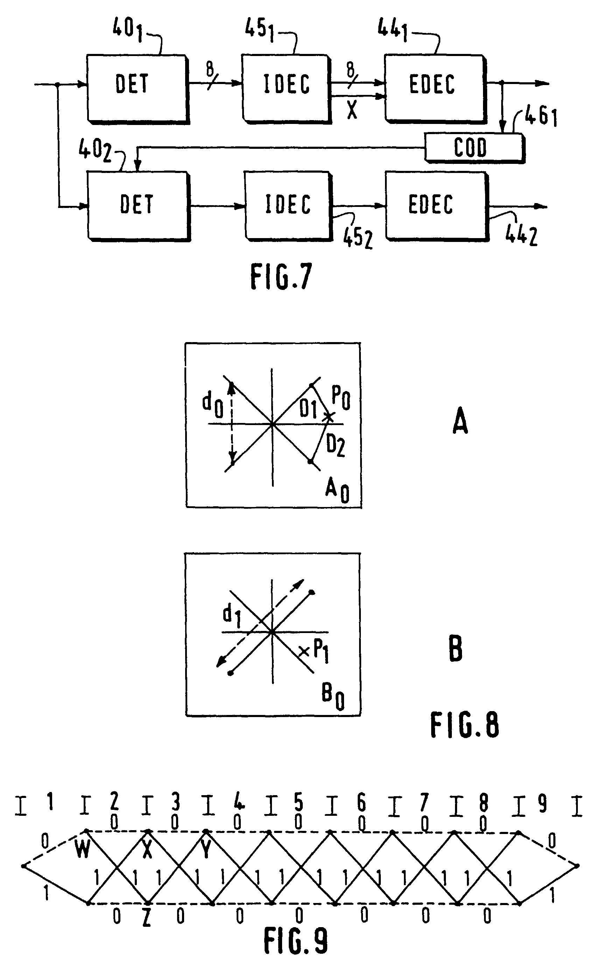

A titre d'exemple, la figure 7 représente un décodage à multiétages pour décoder des codes concaténés utilisant une modulation MDP-4. Le décodage est effectué sur un des blocs de 1080 symboles reçus.

Sur la figure 7 :

- le premier étage comprend un détecteur $40_1$, un décodeur interne $45_1$, un décodeur externe $44_1$ et un codeur $46_1$,
- le second étage comprend un détecteur $40_2$, un décodeur interne $45_2$ et un décodeur externe $44_2$.

Le premier étage décode un code externe RS (40, 30, 11) concaténé avec un code interne de parité (9, 8, 2).

Le second étage décode un code externe RS (120, 110, 11) concaténé avec un code interne de parité (9, 8, 2).

Un bloc S transmis contient 1080 points de la constellation S = ($s_1$..... $s_{1080}$).

Un bloc R reçu contient également 1080 points reçus :

$$R = (r_1 \ldots\ldots r_{1080}).$$

On peut prévoir deux mécanismes de décodage selon que les décodeurs internes génèrent ou non des effacements.

S'il y a génération d'effacement, le décodeur externe RS remplit ces effacements et corrige les erreurs. Un effacement est généré lorsque le mot de code estimé par le décodeur interne n'est pas suffisamment fiable. Ceci nécessite un décodage d'un treillis à deux états pour l'exemple considéré.

S'il n'y a pas génération d'effacement, le décodeur externe RS corrige uniquement les erreurs.

Pour déterminer si un bit estimé est fiable ou non, le décodeur interne détecte le point reçu ($P_o$ dans $A_0$ pour le premier étage ou $P_1$ dans $B_0$ par exemple, pour le deuxième étage figures 8-A et 8-B) et le situe dans la constellation MDP-4. Le premier étage détermine le bit de poids le plus faible et le second étage détermine le bit de poids le plus fort.

a) En cas de génération d'effacement, pour estimer le bit estimé pour le point $P_o$, le détecteur $40_1$ calcule deux distances D1 et D2 par rapport aux deux points de la constellation MDP-4 qui sont les plus proches du point reçu $P_0$. Une telle détection s'opère pour une séquence de points reçus, ici 9 points, compte tenu du décodeur externe utilisé. Le détecteur $40_1$ délivre ainsi des séquences de 9 couples de bits estimés ainsi que les distances $D_1$ et $D_2$ correspondantes. Pour chaque séquence de 9 couples de bits correspondant à 9 points reçus, le décodeur de Viterbi $45_1$ utilise ces données et détermine la qualité certaine ou ambiguë de chaque mot-code interne. Le décodage de Viterbi est un décodage à maximum de vraisemblance qui utilise le treillis du code mis en oeuvre par le codeur.

Le treillis du code interne est représenté sur la figure 9 pour une séquence de 9 points reçus. Les points noirs de la figure 9 représentent les noeuds du treillis. Les traits discontinus correspondent à des bits 0 et les traits continus correspondent à des bits 1. Un chemin aboutissant à un noeud Ni du treillis représente ainsi l'état des décisions effectuées sur les i-1 points précédents de la modulation.

Le décodage à maximum de vraisemblance va consister à déterminer pour, par exemple, un noeud Y, des chemins possibles dans le treillis compte tenu des points précédents déjà décodés. Ainsi pour le noeud Y (figure 9), il peut exister les chemins W X Y ou W Z Y. On calcule une métrique correspondant au cumul des distances $D_1$, $D_2$ déterminées pour chaque point précédent et on choisit le chemin ayant la plus petite métrique comme étant le chemin le plus vraisemblable. Au noeud Y, le décodeur attribue alors au bit du point reçu le bit soit 0 soit 1 correspondant au chemin sélectionné. Cette détermination est effectuée de la même manière à chaque noeud du treillis d'une séquence.

Mais il peut apparaître des situations où les cumuls calculés sur deux chemins différents soient très rapprochés : il y a alors ambiguïté. Dans ce cas, une estimation n'est pas effectuée si l'écart entre les deux cumuls est inférieur à un faible écart prédéterminé. La séquence est alors mise en "état d'effacement". Elle est dite "effacée". Cette comparaison des métriques n'est faite que dans une séquence à la fois et se traduit par un effacement d'une seule séquence à la fois, une séquence correspondant à un symbole du code externe.

Lorsqu'une séquence est effacée, il se crée ainsi une ambiguïté pour la totalité des bits de la séquence et un drapeau X est positionné (figure 7). Cette ambiguïté est ensuite levée par le décodeur externe $44_1$.

Le décodeur de Viterbi $45_1$ délivre ainsi des séquences de 9 bits, dont 8 bits représentent l'information codée, et des séquences effacées. Un mot-code externe correspond à 40 séquences de 8 bits soit 320 bits. Le décodeur externe, qui peut être un décodeur Reed-Solomon, opère sur 8 x 40 bits soit 320 bits et fournit les bits estimés par le premier étage soit 40 séquences de 8 bits d'information.

Second étage.

Le second étage a besoin des bits du premier étage pour opérer. Les bits de parité ont été extraits par le premier étage. Il faut donc les réintroduire dans les 40 séquences avant d'introduire ces 40 séquences dans le second étage. Un codage de parité I (9, 8, 2) effectué par le codeur $46_1$ permet de le faire.

Les séquences de 40 x 9 bits ainsi reconstituées permettent au second détecteur $40_2$ de déterminer le niveau de partition $B_o$ ou $B_1$ à prendre en compte pour la détection. Le décodeur de Viterbi $45_2$ effectue ensuite un décodage sur 9 bits correspondant aux 9 points reçus selon l'exemple choisi pour le codage. Le décodeur externe, qui peut être un décodeur Reed-Solomon, opère sur 8 x 120 bits soit 960 bits et fournit les bits estimés par le second étage soit 120 séquences de 8 bits d'information.

b) Dans le cas où il n'y a pas de génération d'effacements, dans le premier étage, on effectue sur les 9 symboles reçus ($r_1$, $r_2$... $r_9$) une décision à seuil dans la constellation (point le plus proche) pour déterminer les 9 bits correspondant au premier niveau (pour chaque symbole reçu, il s'agit du bit LSB du symbole le plus proche du symbole reçu).

Deux cas se présentent :

- 1er cas : Si les 9 bits vérifient la parité, ces 9 bits constituent la décision optimale.
- 2ème cas : Si la parité n'est pas vérifiée, il suffit de changer 1 bit : le bit le moins fiable. Ce bit le moins fiable est celui qui se rapporte au symbole reçu qui est le plus proche du seuil de décision dans la constellation (c'est-à-dire des axes I et Q).

Pour le second étage, c'est le même principe à la différence que la décision à seuil est effectuée non pas dans $A_0$ mais dans $B_0$ ou $B_1$ dépendant du bit correspondant du 1er niveau, c'est-à-dire que pour $r_i$, on détecte dans $B_o$ si le bit $e_1 = 0$ et dans $B_1$ si $e_1 = 1$, pour estimer le bit $e_2$. Si les 9 bits $e_2$ des 9 symboles reçus vérifient la parité, le résultat est correct. Sinon, on change le bit le moins fiable, c'est-à-dire le bit qui se rapporte au symbole reçu le plus proche du seuil dans $B_o$ ou $B_1$ (les seuils dans ce cas sont les diagonales et non les axes I et Q).

Une trame OFDM comprend ainsi une suite de blocs de données. Il est possible de combiner la transmission de plusieurs modulations codées, un bloc étant codé selon une certaine modulation codée et un autre bloc étant codé selon une autre modulation codée. On peut ainsi combiner des modulations MDP et/ou MAQ entre elles.

## Revendications

1. Système de transmission de signaux numériques opérant par modulation codée d'une constellation, ledit système comprenant un dispositif de codage (5) muni d'un modulateur (13) placé dans une station émettrice et un dispositif de décodage (105) muni d'un démodulateur (113) placé dans une station réceptrice, le dispositif de codage (5) comprenant un codeur de canal (12) à multiétages qui combine un codage de canal à la modulation codée et comprend un organe d'affectation (32) pour affecter les signaux des étages aux points de la constellation et délivrer des symboles, lesdits symboles étant d'abord entrelacés dans un entrelaceur fréquentiel (37) puis modulés dans le modulateur (13) qui opère par répartition multiplexée de porteuses à fréquences orthogonales, et le dispositif de décodage (105) comprenant un démodulateur (113) de signaux modulés par répartition multiplexée de porteuses à fréquences orthogonales et un désentrelaceur fréquentiel (137), ainsi qu'un décodeur de canal (112) à multiétages qui comprend, pour au moins un étage,

   - au moins un décodeur interne ($45_1$, $45_2$) qui effectue un décodage interne en bloc,
   - et au moins un décodeur externe ($44_1$, $44_2$), des détecteurs ($40_1$, $40_2$) opérant une détection sur lesdits niveaux de partition de la constellation, caractérisé en ce que le décodeur interne ($45_1$, $45_2$) génère des effacements de bits et/ou de séquences de bits, au moins le décodeur externe ($44_1$, $44_2$) corrigeant lesdits effacements.

2. Système selon la revendication 1, caractérisé en ce que le dispositif de décodage (105) démodule une combinaison d'au moins deux modulations codées différentes MDP et/ou MAQ.

## Patentansprüche

1. System zur Übertragung digitaler Signale per kodierter Modulation einer Konstellation, das besagte System beinhaltet eine mit einem Modulator (13) versehene, in einer Sendestation vorgesehene Kodiereinrichtung (5), und eine mit einem Demodulator (113) versehene, in einer Empfangsstation vorgesehene Dekodiereinrichtung (105), die Kodiereinrichtung (5) beinhaltet einen Mehrstufen-Kanalkodierer (12), der eine Kanalkodierung mit der kodierten Modulation verbindet und ein Zuordnungsorgan (32) beinhaltet, um die Signale der Stufen den Punkten der Konstellation zuzuordnen und Symbole zu liefern, wobei die besagten Symbole zuerst in einem Frequenzverflechter (37) verflechtet und dann im Modulator (13) per Multiplex-Aufteilung der Trägerwelle in orthogonale Frequenzen moduliert werden, und die Kodiereinrichtung (105) einen Demodulator (113) modulierter Signale per Multiplex-Aufteilung der Trägerwelle in orthogonale Frequenzen und einen Frequenzentflechter (137) sowie einen Mehrstufen-Kanaldekodierer (112) beinhaltet, der wiederum für mindestens eine Stufe

   - mindestens einen internen Dekodierer ($45_1$, $45_2$) zur Vornahme einer internen Blockdekodierung,
   - und mindestens einen externen Dekodierer ($44_1$, $44_2$) mit Detektoren ($40_1$, $40_2$) zum Suchen der besagten Teilungsniveaus der Konstellation beinhaltet, dadurch gekennzeichnet, daß der interne Dekodierer ($45_1$, $45_2$) Löschungen von Bits und/oder Bitsequenzen verursacht, wobei der externe Dekodierer ($44_1$, $44_2$) die besagten

Löschungen zumindest korrigiert.

2. System laut Anspruch 1, dadurch gekennzeichnet, daß die Dekodiervorrichtung (105) eine Verbindung von mindestens zwei verschieden kodierten Modulationen MDP und/oder MAQ demoduliert.

**Claims**

1. A digital signal transmission system which operates by coded modulation of a constellation, said system comprising an encoder (5) which includes a modulator (13) installed at a transmitting station, and a decoder (105) which includes a demodulator (113) installed at a receiving station, the encoder (5) comprising a multi-stage channel encoder (12) which combines a channel coding with the coded modulation and the channel encoder comprising an assigning element (32) for assigning the signals of the stages to points of the constellation and for supplying symbols, the symbols being first interleaved in a frequency interleaver (37) and then modulated in the modulator (13) which works by multiplex distribution of orthogonal frequency carriers and the decoder (105) comprising a demodulator (113) for signals modulated by multiplex distribution of orthogonal frequency carriers and a frequency de-interleaver (137) and also a multi-stage channel decoder (112) which comprises for at least one stage,

   - at least one internal decoder ($45_1$, $45_2$) which performs a decoding inside the block,
   - and at least one external decoder ($44_1$, $44_2$) with detectors carrying out a detection on said partitioning levels of the constellation, characterized in that the internal decoder ($45_1$, $45_2$) generates bit and/or bit sequence erasures while at least the external decoder ($44_1$, $44_2$) corrects said erasures.

2. A system as claimed in Claim 1, characterized in that the decoder (105) demodulates a combination of at least two different coded PSK and/or QAM modulations.

EP 0 578 313 B1

FIG.1

FIG.2

FIG.3

FIG.4

EP 0 578 313 B1

A

| M. COD | MAPP | → | ENTR. | → | ENTR | → | D_COD | → | FFT⁻¹ | MUX | →
31    12    32          37          37a          38          51          53    52

13

B

| DEMUX | FFT | → | D_DECOD | → | ENTR⁻¹ | → | ENTR⁻¹ | → | DET | M_DECOD | →
152   153   151         138         137a         137         112   132   131

113

FIG.5

FIG.6

FIG.7

A

B

FIG.8

FIG.9